# EUROPÄISCHE PATENTSCHRIFT

(11) **EP 2 298 610 B1**
(45) Veröffentlichungstag und Bekanntmachung des Hinweises auf die Patenterteilung: **10.07.2013**
(21) Anmeldenummer: 10162193.6
(22) Anmeldetag: 06.05.2010
(51) Int. Cl.: B60R 19/34, F16F 7/12

(54) **Crashelement**
Crash element
Elément d'absorption de choc

(43) Veröffentlichungstag der Anmeldung: 23.03.2011
(73) Patentinhaber: ISE Automotive GmbH, 51702 Bergneustadt (DE)
(72) Erfinder: Engels, Frank, 57489 Drolshagen (DE); Hartebrodt, Raphael, 57489 Drolshagen (DE); Maier, Dirk, 53721 Siegburg (DE); Röhner, Dr. Stephan, 44287 Dortmund (DE)
(74) Vertreter: Kalkoff & Partner

(56) Entgegenhaltungen:
- EP-A1- 0 763 448
- EP-A1- 2 045 141
- EP-A2- 0 463 371
- WO-A1-01/76783
- DE-A1- 19 711 647
- DE-A1- 19 721 608
- DE-A1-102006 044 384
- DE-U1-202007 018 200
- US-A1- 2006 237 976

## Beschreibung

Die Erfindung betrifft ein Crashelement, insbesondere eine Crashbox für Kraftfahrzeuge, mit einem im Crashfall energieabsorbierend deformierbaren Hohlkammerprofil und einer Trägerplatte zur Anordnung des Hohlkammerprofils an einem Längs- und/oder Biegeträger des Kraftfahrzeuges, wobei das Hohlkammerprofil und die Trägerplatte einstückig ausgebildet sind.

Zum Zwecke einer höheren passiven Sicherheit sowie um das Schadensbild an einer Fahrzeugkarosserie bei Unfällen mit niedriger Geschwindigkeit so gering wie möglich zu halten, werden vermehrt sogenannte Crashelemente bzw. Crashboxen eingesetzt. Im Falle eines Aufpralls vermindert die Crashbox die auf die Karosseriestruktur übertragene Aufprallenergie und verhindert somit deren Beschädigung bzw. verringert den Grad der Beschädigung. Im Rahmen der Erfindung wird dabei unter dem Begriff Crashbox ein Bauteil verstanden, welches neben einem Hohlkammerprofil, das zum Abbau der im Crashfall auftretenden Energie deformierbar ist, eine Trägerplatte zur Anordnung des Hohlkammerprofils an einem Längs- oder Biegeträger aufweist.

Bekannte Crashelemente, bzw. Crashboxen sind als mehrteilige Bauteile ausgeführt, bei denen das Hohlkammerprofil mit entsprechenden Anbauteilen, insbesondere der Trägerplatte, verschen wird, um das Crashelement am Fahrzeug anordnen zu können. Derartige Crashelemente weisen den Nachteil auf, dass sie einen erhöhten Fertigungsaufwand aufweisen, nachdem sichergestellt werden muss, dass die im Crashfall auftretenden Kräfte zuverlässig von der Trägerplatte auf das deformierbare Hohlkammerprofil übertragen werden.

Einteilige Crashelemente zeigt die veröffentlichte Patentanmeldung EP 763448 A, die auch den Oberbegriff der Ansprüche 1 und 10 definiert.

Der Erfindung liegt die Aufgabe zugrunde, ein Crashelement bereitzustellen, welches sich besonderes kostengünstig herstellen lässt.

Die Erfindung löst die Aufgabe durch ein Crashelement, insbesondere eine Crashbox mit den Merkmalen des Anspruchs 1 sowie ein Verfahren mit den Merkmalen des Anspruchs 10. Vorteilhafte Weiterbildungen der Erfindung sind in den abhängigen Ansprü chen angegeben.

Kennzeichnend für das erfindungsgemäße Crashelement ist, dass die Trägerplatte Bereiche höherer und/oder geringerer Dicke aufweisen. Darüber hinaus sind das Hohlkammerprofil und die Trägerplatte einstückig ausgebildet. Diese Ausgestaltung der Trägerplatte lässt sich in besonders einfacher Weise im Rahmen des Formgebungsprozesses, insbesondere der kaltfließpresstechnischen Herstellung realisieren. Somit lässt sich die Trägerplatte in besonderer Weise an die im Crashfall auftretenden Belastungen anpassen. Bereiche höherer Belastungen können entsprechend höhere Dicken gegenüber Bereichen mit geringerer Belastung aufweisen.

Die einstückige Ausbildung gewährleistet in besonderem Maße ein Crashelement mit einer hohen Stabilität. Insbesondere wird besonders zuverlässig gewährleistet, dass es zu keiner Trennung zwischen dem Hohlkammerprofil und der Trägerplatte im Falle eines Crashs kommt. Die einstückige Ausbildung von Hohlkammerprofil und Trägerplatte ermöglicht es dabei, auf eine arbeits- und zeit- sowie kostenintensive fertigungstechnische Verbindung der Trägerplatte und des Hohlkammerprofils zu verzichten. Darüber hinaus können durch geeignete Formgebungsprozesse das Hohlkammerprofil und die Trägerplatte bereits bei der Fertigung entsprechend den konstruktiven Vorgaben ausgebildet werden.

Die einstückige Ausbildung von Hohlkammerprofil und Trägerplatte kann grundsätzlich in beliebiger Weise erfolgen. Nach dem erfindungsgemäßen Verfahren sind das Hohlkammerprofil und die Trägerplatte jedoch fließpresstechnisch, insbesondere kaltfließpresstechnisch als einstückiges Bauteil hergestellt. Ein entsprechend hergestelltes Crashelement zeichnet sich, insbesondere im Falle der kaltfließpresstechnischen Herstellung, durch seine außerordentlich geringen Toleranzen, hohe Oberflächengüte sowie nur minimalem Materialverbrauch bei der Herstellung aus. Das derart hergestellte Crashelement erfordert insoweit keine Nacharbeit, nachdem bereits im Rahmen des Formgebungsprozesses eine hohe Maßgenauigkeit erreicht werden kann. Hierdurch werden die Kosten für die Herstellung des Crashelements in ergänzender Weise gesenkt.

Das Crashelement kann grundsätzlich aus beliebigen Materialien hergestellt werden. Nach einer besonders vorteilhaften Ausgestaltung der Erfindung ist das einstückige, Hohlkammerprofil und Trägerplatte aufweisende Bauteil jedoch aus Aluminium gebildet. Die Verwendung von Aluminium zeichnet sich dabei dadurch aus, dass es sich besonderes kostengünstig fließpresstechnisch bearbeiten lässt und überdies die Herstellung von Crashelementen mit einem nur geringen Eigengewicht und gleichzeitig hoher Stabilität ermöglicht. prozess in geeigneter Weise eingestellt werden. Nach einer vorteilhaften Weiterbildung der Erfindung ist das Bauteil jedoch durch sich zwischen dem Hohlkammerprofil und der Trägerplatte erstreckende Versteifungselemente, insbesondere Stege verstärkt. Die Stege stützen in ergänzender Weise das Hohlkammerprofil gegenüber der Trägerplatte ab und erhöhen die Widerstandsfähigkeit des Hohlkammerprofils im Crashfall. Die Verwendung von Stegen zeichnet sich dabei dadurch aus, dass sie in besonders einfacher und kostengünstiger Weise eine Verstärkung des Bauteils - falls erforderlich - ermöglichen, so dass auf andernfalls erforderliche höhere Materialdicken des Bauteils verzichtet werden kann. Hierdurch besteht in ergänzender Weise die Möglichkeit, das Crashelement besonders kostengünstig herzustellen.

Nach einer vorteilhaften Ausgestaltung der Erfindung weist das Hohlkammerprofil in Längsachsenrichtung einen sich verändernden Innen- und/oder Außenquerschnitt auf. Gemäß dieser Erfindung verändert sich die Materialdicke des Hohlkammerprofils in dessen Längsachsenrichtung betrachtet. D. h., das Hohlkammerprofil kann Bereiche mit einer geringeren und Bereiche mit einer höheren Materialdicke aufweisen und/oder bereichsweise gegenüber angrenzenden Abschnitten nach innen und/oder außen verformt ausgebildet sein. Diese bereits im Rahmen der Herstellung umsetzbare Ausformung ermöglicht die Herstellung eines besonders stabilen Hohlkammerprofils, so dass auf ergänzende Aussteifungselemente oder dergleichen verzichtet werden kann.

Die Ausgestaltung des Verbindungsbereichs zwischen dem Hohlkammerprofil und der Trägerplatte, d. h. der Bereich, in dem die Trägerplatte in das Hohlkammerprofil übergeht, ist beliebig ausgestaltbar. Nach einer besonders vorteilhaften Ausgestaltung ist der Verbindungsbereich jedoch bogenförmig und/oder abgeschrägt ausgebildet. Eine entsprechende Ausgestaltung des Verbindungsbereiches lässt sich in besonders einfacher Weise durch eine fließpresstechnische Herstellung realisieren. Die bogenförmige bzw. abgeschrägte Ausbildung gewährleistet dabei in besonderem Maße eine gute Kraftübertragung von der Trägerplatte auf das Hohlkammerprofil und verhindert in ergänzender Weise ein Abreißen des Hohlkammerprofils von der Trägerplatte, so dass die Möglichkeit besteht, den Verbindungsbereich mit einer gegenüber einer senkrecht zum Hohlkammerprofil angeordneten Trägerplatte geringere Materialdicke auszuführen.

Nach einer weiteren Ausgestaltung der Erfindung ist der Verbindungsbereich derart Nach einer weiteren Ausgestaltung der Erfindung ist der Verbindungsbereich derart ausgebildet, dass er einen erhöhten Widerstand gegen Torsionsbelastungen aufweist. Der Verbindungsbereich kann dabei in bekannter Weise mit entsprechenden torsionsverstärkenden Elementen, bspw. Abstellungen versehen werden. Diese können bereits im Rahmen des Fertigungsverfahrens eingebracht werden, so dass kein erhöhter Herstellungsaufwand entsteht.

Nach einer Weiterbildung der Erfindung sind im Inneren des Hohlkammerprofils Ausbuchtungen und/oder Vorsprünge, insbesondere Stege angeordnet. Derartige Ausbuchtungen oder Vorsprünge können bereits im Formgebungsprozess, d. h. während der fließpresstechnischen Herstellung am Hohlkammerprofil ausgeformt sein. Alternativ besteht jedoch auch die Möglichkeit, im Anschluss an den Ausformungsprozess Stege im Inneren des Hohlkammerprofils anzuordnen. Diese können zur Aufnahme oder Abstützung von Anbauteilen, wie bspw. Aufnahmen für eine Abschleppöse oder einen Einsatz zur Aufnahme einer Abschleppöse vorgesehen werden. Der Einsatzzweck des Crashelements wird somit in ergänzender Weise gesteigert, so dass auf alternative Anbauteile verzichtet werden kann.

Nach einer weiteren Ausgestaltung der Erfindung weist das Hohlkammerprofil innen- und/oder außenseitig angeordnete Verstärkungselemente, insbesondere Verstärkungsrippen, Stege oder Sicken auf. Diese Ausgestaltung der Erfindung ermöglicht es, das Hohlkammerprofil in besonderer Weise mit der erforderlichen Steifigkeit auszugestalten.

Bei dem erfindungsgemäßen Verfahren zur Herstellung des Crashelements werden das Hohlkammerprofil und die Trägerplatte als einstückiges Bauteil durch fließpresstechnische, insbesondere kaltfließpresstechnische Bearbeitung eines Rohlings hergestellt, wobei die Trägerplatte derart fließtechnisch bearbeitet wird, dass diese bereichsweise unterschiedliche Materialdicken aufweist. Das Verfahren zeichnet sich dabei dadurch aus, dass es in besonders einfacher Weise die Herstellung eines besonders stabilen Crashelements ermöglicht. Ein Rohling wird in die entsprechende Umformvorrichtung eingelegt und durch einen Pressstempel in vorbestimmter Weise plastisch verformt. Vorteilhafterweise trifft dabei ein nur geringer Materialverbrauch auf und das hergestellte Bauteil weist eine nur geringe Toleranz sowie eine hohe Oberflächengüte auf.

Bei der gemäß einer Weiterbildung der Erfindung vorgesehenen vorwärtsfließpresstechnischen, insbesondere hohlvorwärtsfließpresstechnischen Herstellung des Bauteils wird der Rohling, bspw. ein Alumiumbutzen oder Profilabschnitt durch einen Stempel in das mit einer Matrize versehene Werkzeug gepresst, bis der Rohling das Werkzeug ausfüllt und die gewünschte Form aufweist. Dieses Verfahren lässt sich, insbesondere im Falle der vorteilhafterweise vorgesehenen Verwendung von Aluminiumrohlingen zur Herstellung des Bauteils, besonders einfach und kostengünstig durchführen. Insofern besteht die auch Möglichkeit, die Crashelemente mit einem besonders geringen Gewicht herzustellen.

Besonders vorteilhafterweise wird das Hohlkammerprofil und/oder die Trägerplatte dabei derart fließpresstechnisch hergestellt, dass Hohlkammerprofil Bereiche unterschiedlicher Materialdicken aufweisen.

Ausführungsbeispiele der Erfindung werden nachstehend mit Bezug auf die Zeichnungen näher erläutert. In den Zeichnungen zeigen:
- Fig. 1: eine Skizze einer perspektivischen Ansicht eines Crashelements;
- Fig. 2: eine Skizze einer Draufsicht eines Crashelements und
- Fig. 3: eine Skizze einer Schnittansicht eines Crashelements.

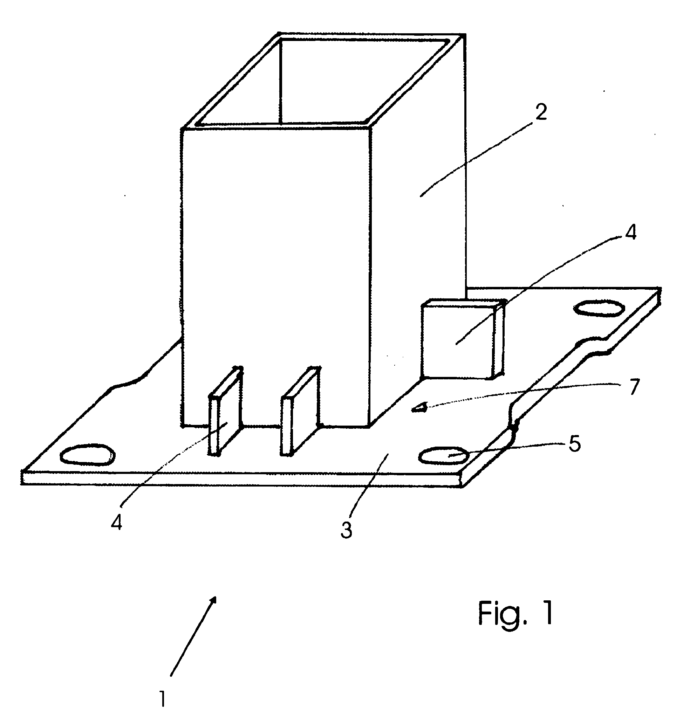

Das in Fig. 1 skizzenartig dargestellte Crashelement 1 setzt sich zusammen aus einem profil 2 gegenüber der Trägerplatte 3 abstützen. In den Eckbereichen der Trägerplatte 3 angeordnete Aufnahmeöffnungen 5 ermöglichen eine einfache Anbindung des Crashelements 1 an einem hier nicht dargestellten Quer- oder Längsträger.

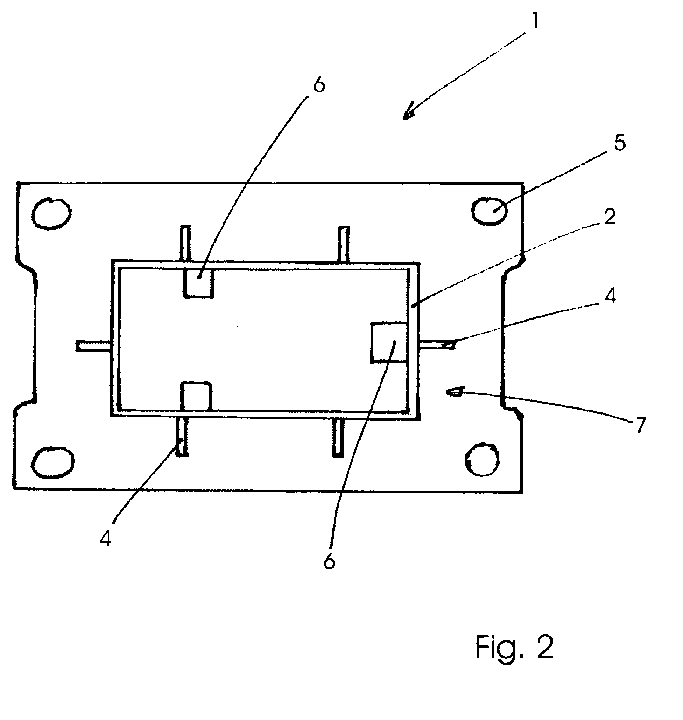

Innerhalb des Hohlkammerprofils 2 sind, wie aus Fig. 2 ersichtlich, Vorsprünge 6 angeordnet, an denen hier nicht dargestellte Anbauteile angeordnet werden können. Bspw. können die Vorsprünge 6 zur Aufnahme oder Abstützung einer Aufnahme für eine Abschleppöse verwendet werden.

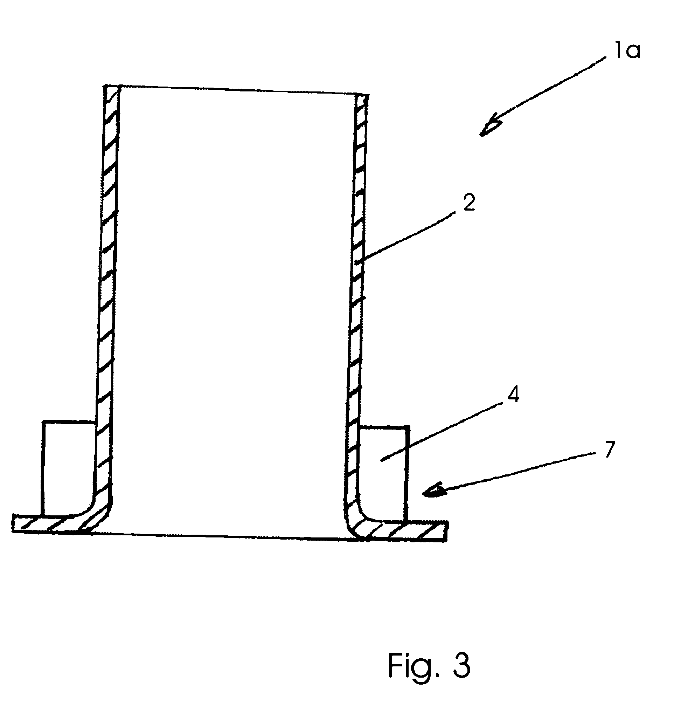

Der Verbindungsbereich 7 des in den Fig. 1 und 2 dargestellten Crashelements 1 ist rechteckig ausgeführt. In Fig. 3 ist eine alternative Ausgestaltung des Verbindungsbereiches 7 dargestellt, bei dem dieser bogenförmig verläuft. Das Crashelement 1a weist aufgrund der bogenförmigen Ausgestaltung eine besonders hohe Stabilität auf.

## Patentansprüche

1. Crashelement, insbesondere Crashbox für Kraftfahrzeuge, mit einem im Crashfall energieabsorbierend deformierbaren Hohlkammerprofil und einer Trägerplatte zur Anordnung des Hohlkammerprofils an einem Längs- und/oder Biegeträger des Kraftfahrzeugs, wobei das Hohlkammerprofil (2) und die Trägerplatte (3) einstückig ausgebildet sind, **dadurch gekennzeichnet, dass** die Trägerplatte (3) Bereiche höherer und/oder geringerer Dicke aufweist.

2. Crashelement nach Anspruch 1, **dadurch gekennzeichnet, dass** das Hohlkammerprofil (2) und die Trägerplatte (3) als einstückiges Bauteil fließpresstechnisch, insbesondere kaltfließpresstechnisch hergestellt sind.

3. Crashelement nach Anspruch 1 oder 2, **dadurch gekennzeichnet, dass** das Bauteil aus Aluminium, einer Aluminiumlegierung und/oder Aluminiumwerkstoff gebildet ist.

4. Crashelement nach einem der vorhergehenden Ansprüche, **dadurch gekennzeichnet, dass** das Bauteil durch sich zwischen dem Hohlkammerprofil (2) und der Trägerplatte (3) erstreckende Versteifungselemente, insbesondere Stege (4) verstärkt ist.

5. Crashelement nach einem der vorhergehenden Ansprüche, **dadurch gekennzeichnet, dass** ein Verbindungsbereich (7) zwischen dem Hohlkammerprofil (2) und der Trägerplatte (3) bogenförmig und/oder abgeschrägt ausgebildet ist.

6. Crashelement nach einem der vorhergehenden Ansprüche, **dadurch gekennzeichnet, dass** der Verbindungsbereich (7) derart ausgebildet ist, dass er einen erhöhten Widerstand gegen Torsionsbelastungen aufweist.

7. Crashelement nach einem der vorhergehenden Ansprüche, **dadurch gekennzeichnet, dass** im Inneren des Hohlkammerprofils (2) Ausbuchtungen und/oder Vorsprünge (6), insbesondere Stege angeordnet sind.

8. Crashelement nach einem der vorhergehenden Ansprüche, **dadurch gekennzeichnet, dass** das Hohlkammerprofil (2) in Längsachsenrichtung sich verändernde Innen- und/oder Außenquerschnitt aufweist.

9. Crashelement nach einem der vorhergehenden Ansprüche, **dadurch gekennzeichnet, dass** das Hohlkammerprofil (2) innen- und/oder außenseitig angeordnete Verstärkungselemente, insbesondere Verstärkungsrippen, Stege oder Sicken aufweist.

10. Verfahren zur Herstellung eines Crashelements, insbesondere einer Crashbox für Kraftfahrzeuge, mit einem im Crashfall energieabsorbierend deformierbaren Hohlkammerprofil und einer Trägerplatte zur Anbindung des Hohlkammerprofils an einem Längs- und/oder Biegeträger eines Kraftfahrzeugs, wobei das Hohlkammerprofil (2) und die Trägerplatte (3) als einstückiges Bauteil durch fließpresstechnische, insbesondere kaltfließpresstechnische Bearbeitung eines Rohlings hergestellt werden, **dadurch gekennzeichnet, dass** die Trägerplatte (3) derart fließpresstechnisch bearbeitet wird, dass diese bereichsweise unterschiedliche Materialdicken aufweist.

11. Verfahren nach Anspruch 11, **dadurch gekennzeichnet, dass** das Bauteil aus einem Aluminiumrohling hergestellt wird.

12. Verfahren nach Anspruch 10 oder 11, **dadurch gekennzeichnet, dass** das Bauteil vorwärtsfließpresstechnisch, insbesondere hohlvorwärtsfließpresstechnisch hergestellt wird.

13. Verfahren nach einem der Ansprüche 10 bis 12, **dadurch gekennzeichnet, dass** das Bauteil derart fließpresstechnisch hergestellt wird, dass das Hohlkammerprofil (2) bereichsweise unterschiedliche Materialdicken aufweist.

## Claims

1. A crash element, particularly a crash box for motor vehicles, having a deformable hollow chamber profile, absorbing energy in the event of a crash, and a carrier plate for disposing the hollow chamber profile at a longitudinal and/or bendable support of the motor vehicle, wherein the hollow chamber profile (2) and the carrier plate (3) are formed integrally, **characterized in that** the carrier plate (3) has regions of greater and/or lesser thickness.

2. The crash element according to claim 1, **characterized in that** the hollow chamber profile (2) and the carrier plate (3) are produced as an integral component using extrusion technology, particularly cold extrusion technology.

3. The crash element according to claim 1 or 2, **characterized in that** the component is composed of aluminum, an aluminum alloy and/or aluminum material.

4. The crash element according to one of the preceding claims, **characterized in that** the component is reinforced by stiffening elements, particularly bars (4), extending between the hollow chamber profile (2) and the carrier plate (3).

5. The crash element according to one of the preceding claims, **characterized in that** a connecting region (7) is formed curved and/or slanted between the hollow chamber profile (2) and the carrier plate (3).

6. The crash element according to one of the preceding claims, **characterized in that** the connecting region (7) is formed having an increased resistance against torsional loads.

7. The crash element according to one of the preceding claims, **characterized in that** bulges and/or projections (6), particularly bars, are disposed in the interior of the hollow chamber profile (2).

8. The crash element according to one of the preceding claims **characterized in that** the hollow chamber profile (2) in the longitudinal axis direction has a varying internal and/or external cross section.

9. The crash element according to one of the preceding claims, **characterized in that** the hollow chamber profile (2) has reinforcing elements, particularly reinforcing ribs, bars or beadings disposed internally and/or externally.

10. A method for producing a crash element, particularly a crash box for motor vehicles, having a deformable hollow chamber profile, absorbing energy in the event of a crash, and a carrier plate for attaching the hollow chamber profile at a longitudinal and/or bendable support of the motor vehicle, wherein the hollow chamber profile (2) and the carrier plate (3) are produced as an integral component using extrusion technology, particularly cold extrusion technology processing of a blank **characterized in that** the carrier plate (3) is processed using extrusion technology such that it has different material thicknesses in regions.

11. The method according to claim 11, **characterized in that** the component is produced from an aluminum blank.

12. The method according to claim 10 or 11, **characterized in that** the component is produced using direct extrusion technology, particularly direct tubular extrusion technology.

13. The method according to one of the claims 10 to 12, **characterized in that** the component is produced using extrusion technology such that the hollow chamber profile (2) has different thicknesses in regions.

## Revendications

1. Elément d'absorption de choc, en particulier boîte-tampon pour véhicules automobiles, avec un profilé à chambre creuse déformable absorbant l'énergie en cas de choc et avec une plaque support pour l'agencement du profilé à chambre creuse sur une ferme longitudinale et/ou un support sollicité en flexion du véhicule automobile, le profilé à chambre creuse (2) et la plaque support (3) étant réalisés d'une seule pièce, **caractérisé en ce que** la plaque support (3) présente des zones d'épaisseur plus grande et/ou plus petite.

2. Elément d'absorption de choc selon la revendication 1, **caractérisé en ce que** le profilé à chambre creuse (2) et la plaque support (3) sont fabriqués en tant que composant d'une seule pièce par extrusion, en particulier par extrusion à froid.

3. Elément d'absorption de choc selon la revendication 1 ou 2, **caractérisé en ce que** le composant est réalisé en aluminium, en alliage d'aluminium et/ou en matériau à base d'aluminium.

4. Elément d'absorption de choc selon une des revendications précédentes, **caractérisé en ce que** le composant est renforcé par des éléments de raidissement, en particulier des entretoises (4), s'étendant entre le profilé à chambre creuse (2) et la plaque support (3).

5. Elément d'absorption de choc selon une des revendications précédentes, **caractérisé en ce qu'**une zone de raccordement (7) est réalisée sous forme arquée et/ou en biseau entre le profilé à chambre creuse (2) et la plaque support (3).

6. Elément d'absorption de choc selon une des revendications précédentes, **caractérisé en ce que** la zone de raccordement (7) est réalisée de telle sorte qu'elle présente une résistance accrue aux contraintes de torsion.

7. Elément d'absorption de choc selon une des revendications précédentes, **caractérisé en ce que** des indentations et/ou des saillies (6), en particulier des entretoises, sont disposées dans l'intérieur du profilé à chambre creuse (2).

8. Elément d'absorption de choc selon une des revendications précédentes, **caractérisé en ce que** le profilé à chambre creuse (2) présente une section transversale intérieure et/ou extérieure qui varie dans la direction de l'axe longitudinal.

9. Elément d'absorption de choc selon une des revendications précédentes, **caractérisé en ce que** le profilé à chambre creuse (2) présente des éléments de renfort disposés côté intérieur et/ou extérieur, en particulier des nervures de renfort, des entretoises ou des moulures.

10. Procédé de fabrication d'un élément d'absorption, en particulier d'une boîte-tampon pour des véhicules automobiles, avec un profilé à chambre creuse déformable absorbant l'énergie en cas de choc et avec une plaque support pour un raccordement du profilé à chambre creuse sur une ferme longitudinale et/ou un support sollicité en flexion du véhicule automobile, le profilé à chambre creuse (2) et la plaque support (3) étant fabriqués en tant que composant d'une seule pièce par extrusion d'une ébauche, en particulier par extrusion à froid, **caractérisé en ce que** la plaque support (3) est usinée par extrusion de telle sorte qu'elle présente par tronçons des épaisseurs de matériau différentes.

11. Procédé selon la revendication 11, **caractérisé en ce que** le composant est fabriqué à partir d'une ébauche en aluminium.

12. Procédé selon la revendication 10 ou 11, **caractérisé en ce que** le composant est fabriqué par extrusion en avant, en particulier par extrusion en avant de tubes.

13. Procédé selon une des revendications 10 à 12, **caractérisé en ce que** le composant est fabriqué par extrusion de telle sorte que le profilé à chambre creuse (2) présente par tronçons des épaisseurs de matériau différentes.
